(19) **Europäisches Patentamt**

**European Patent Office**

**Office européen des brevets**

(11) **EP 1 524 514 A1**

(12) **EUROPEAN PATENT APPLICATION**
published in accordance with Art. 158(3) EPC

(43) Date of publication:
**20.04.2005 Bulletin 2005/16**

(51) Int Cl.7: **G01N 21/03**

(21) Application number: **03733487.7**

(86) International application number:
**PCT/JP2003/007725**

(22) Date of filing: **18.06.2003**

(87) International publication number:
**WO 2004/001397 (31.12.2003 Gazette 2004/01)**

(84) Designated Contracting States:
**AT BE BG CH CY CZ DE DK EE ES FI FR GB GR HU IE IT LI LU MC NL PT RO SE SI SK TR**

(30) Priority: **20.06.2002 JP 2002180584**

(71) Applicant: **ZEON CORPORATION**
**Chiyoda-ku Tokyo 100-8323 (JP)**

(72) Inventors:
• **Tada, Mitsushi**
  **Chiyoda-ku, Tokyo 100-8323 (JP)**

• **Yoneda, Ikuhiro**
  **Chiyoda-ku, Tokyo 100-8323 (JP)**
• **Jimbo, Toshihiko**
  **Chiyoda-ku, Tokyo 100-8323 (JP)**

(74) Representative: **VOSSIUS & PARTNER**
**Siebertstrasse 4**
**81675 München (DE)**

(54) **ALICYCLIC STRUCTURE-CONTAINING POLYMER RESIN CONTAINER AND OPTICAL ANALYSIS METHOD USING THE CONTAINER**

(57)     A container for optical analysis composed of a bottom portion and a sidewall portion, wherein the bottom portion and the sidewall portion are made by a resin containing an alicyclic structure, and surface roughness Ra is 1 μm or less, at the point where light for the optical analysis passes through, in the area where the bottom portion and the sidewall portion contacts with the measuring subject therefor.

FIG. 1

**Description**

TECHNICAL FIELD

The present invention relates to a container made of a resin containing an alicyclic structure and an optical analysis method using the same, and particularly relates to a container made of a resin containing an alicyclic structure and an optical analysis method using the same capable of attaining superior measurement accuracy comparing with that of the related art and being used repeatedly.

BACKGOUND ART

In analyzing DNA and RNA, a quartz cell has been conventionally used. Since quartz cells are expensive, they are washed and used repeatedly, however, they are hard to be handled for being poor at impact-resistance and getting broken when dropped. Therefore, a cell of a relatively lower price than quartz has been demanded. From this viewpoint, polymer materials, such as polymethyl methacrylate (PMMA), polycarbonate (PC), polystyrene (PS) and polyethylene terephthalate (PET), have been adopted. These polymer materials generally exhibit absorbance in an ultraviolet ray range, so that when purity of a subject substance, etc. is measured by an absorbance analyzing method, etc. by using a cell made by these materials, it was unable to obtain an accurate measurement value. In addition, polymethyl methacrylate (PMMA) and polycarbonate (PC) had disadvantages of having a high water absorbing property and high hydrolysis property at the time of injection molding and large birefringence, etc. Furthermore, for example, PMMA has low thermal stability, such that decomposition reaction based on depolymerization is brought at a relatively low temperature of 280°C, so that there is a problem that the cell itself contains relatively much monomer.

In the Japanese Unexamined Patent Publication No. 8-136446, an analysis cell formed by a cyclic olefin based resin is proposed. Furthermore, the Japanese Unexamined Patent Publication No. 2000-39420 discloses a polymer obtained by hydrogenating a copolymer of a homopolymer made by 1,3-cyclohexadiene (CHD) or a CHD derivative and other monomer which can be copolymerized with these, and proposes to obtain a microchip made by a resin by performing injection molding on the polymer.

Also, in an optical analysis field, there is a demand for an analyzing container capable of maintaining analysis with high measurement accuracy even when repeatedly used in a wavelength range of an ultraviolet ray (240 to 400 nm). Particularly, protein, etc. included in DNA and RNA is removed by alkali washing in analyzing DNA and RNA, when used repeatedly. However, even when using the container obtained in the above publications, there are problems that it is not capable of bearing repeated use and measurement accuracy is low when analyzing by using it.

DISCLOSURE OF THE INVENTION

An object of the present invention is to provide a container and an optical analysis method capable of obtaining excellent measurement accuracy in a wavelength range of an ultraviolet ray even when repeatedly used.

As a result of studies on deterioration of measurement accuracy due to repeated use of the container, the present inventors found that the measurement accuracy became remarkably improved and deterioration of measurement accuracy was suppressed small in spite of repeated use, when using a container made by a resin containing an alicyclic structure, wherein surface roughness on a contact face with a measuring subject is adjusted to a specific value, and completed the present invention based on the knowledge.

According to the present invention, there are respectively provided

(1) a container for optical analysis composed of a bottom portion and a sidewall portion,
    wherein said bottom portion and said sidewall portion are made by a resin containing an alicyclic structure, and
    surface roughness Ra is 1 μm or less, at the point where light for the optical analysis passes through, in the area where the bottom portion or the sidewall portion contacts with the measuring subject therefor;

(2) the container as set forth in above (1),
wherein thickness of said bottom portion and sidewall portion is 3 mm or thinner;

(3) the container as set forth in above (1),
wherein surface roughness Ra is 1 μm or less at the point where the light for optical analysis does not pass in said bottom portion and sidewall portion;

(4) the container as set forth in above (2),
wherein absorbance at a wavelength of 240 to 400 nm is 0.4 or lower at said thickness;

(5) the container as set forth in above (1),
wherein said alicyclic structure containing polymer is a norbornene based polymer or hydrogenate of the same;

(6) the container as set froth in above (1),
wherein said resin containing alicyclic structure is hydrogenated ring-opening polymer of a norbornene based monomer;
(7) the container as set froth in above (1),
wherein a residual metal content in said resin containing alicyclic structure is 100 ppm or less;
(8) the container as set froth in above (1),
wherein the measuring subject includes DNA or RNA;
(9) the container as set froth in above (1), which is a multi-well plate;
(10) an optical analyzing method of a measuring subject comprising the steps of:

putting the measuring subject into a container composed of a bottom portion and a sidewall portion, wherein the bottom portion and the sidewall portion are made by a resin containing alicyclic structure, and surface roughness Ra is 1 μm or less, at the point where light for the optical analysis passes through, in the area where the bottom portion or the sidewall portion contacts with the measuring subject therefor; and
performing optical analysis on a measuring subject by using light having a wavelength of 240 to 400 nm; and

(11) The analyzing method as set forth in above (10), wherein the measuring subject includes DNA or RNA.

In the container of the present invention, absorbance in an ultraviolet wavelength range is low and changes little before and after alkali washing, so that it can be repeatedly used. Also, by using the container of the present invention, optical analysis in an ultraviolet wavelength range can be performed accurately and repeatedly.

## BRIEF DESCRIPTION OF DRAWINGS

FIG. 1 is a view showing a container according to an embodiment of the present invention and the basic configuration of an optical analyzing method;
FIG. 2 is a perspective view showing a container according to an embodiment of the present invention; and
FIG. 3 is a sectional view along a line III-III in FIG. 2.

## BEST MODE FOR CARRYING OUT THE INVENTION

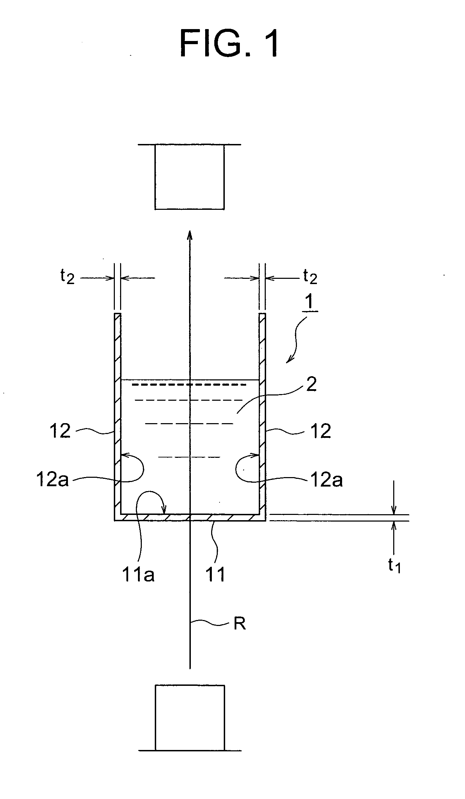

As shown in FIG. 1, a container 1 for optical analysis of the present invention is a container for optical analysis composed of a bottom portion 11 and a sidewall portion 12, wherein the bottom portion 11 and the sidewall portion 12 are made by a resin containing an alicyclic structure, and, in contact faces 11a and 12a of the bottom portion 11 and the sidewall portion 12 with a measuring subject 2, surface roughness Ra of a portion 11a, where light R for optical analysis passes through, is 1 μm or less, preferably 0.5 m or less, and further preferably 0.2 μm or less.

In the present invention, contact faces with the measuring subject 2 of the bottom portion 11 and the sidewall portion 12 have a light pass-through portion 11a and a not light pass-through portion 12a. The surface roughness Ra of the not light pass-through portion 12a is also preferably 1 μm or less, more preferably 0.5 μm or less, particularly preferably 0.2 μm or less. By making the surface roughness Ra of the contact surfaces 11a and 12a on the container 1 with the measuring subject 2 within the above ranges, it is possible to prevent adsorption of substances which hinders measurement (for example, protein) after alkali washing and deterioration of the contact faces 11a and 12a, and highly accurate measurement becomes possible even when repeatedly used. Note that the surface roughness Ra of the contact faces 11a and 12a on the container 1 with the measuring subject 2 is measured by a laser interferometry type surface roughness measuring device.

The container 1 of the present invention preferably has thicknesses $t_1$ and $t_2$ of 3 mm or thinner. Also, the lower limit of the thicknesses $t_1$ and $t_2$ can be suitably selected in consideration of strength of the container 1, and normally is 50 μm or so. When the thicknesses $t_1$ and $t_2$ are thicker than the above ranges, the absorbance and birefringence are increased and measurement accuracy tends to decline.

The container 1 of the present invention has absorbance of preferably 0.4 or lower, more preferably 0.3 or lower, particularly preferably 0.2 or lower at a wavelength of 240 to 400 nm when the thicknesses are $t_1$ and $t_2$. When the absorbance is in the above ranges, measurement accuracy can be improved.

A resin containing an alicyclic structure used for producing the container 1 of the present invention contains an alicyclic structure in a repeating unit of the polymer, and the alicyclic structure may be any of a main chain or side chain. As the alicyclic structure, a cycloalkane structure and cycloalkene structure, etc. may be mentioned, but a cycloalkane structure is preferable in terms of heat-stable property. The number of carbon atoms constituting the alicyclic structure is normally 4 to 30, preferably 5 to 20, and more preferably 5 to 15. When the number of carbon atoms constituting the alicyclic structure is in the ranges, a container for optical analysis having excellent heat resistance and flexibility can be obtained. A ratio of the repeating units having the alicyclic structure in the resin containing the alicyclic structure may be suitably selected in accordance with the use object, but normally is 50 wt% or more, preferably 70 wt% or more, and more preferably 90 wt% or more. When the ratio of repeating units having the alicyclic structure is excessively small, the heat resistance declines, which is not preferable. Note that repeating units other than those having the alicyclic structure in the resin containing the alicyclic structure is suitably selected in accordance with the use object.

As specific examples of the resin containing the alicyclic structure, (1) a norbornene-based polymer, (2) a monocyclic cyclic olefin polymer, (3) a cyclic conjugated diene polymer, (4) a vinyl alicyclic hydrocarbon polymer, and hydrogenated products of (1) to (4) may be mentioned. Among these, a norbornene-based polymer or the hydrogenate is preferable in terms of heat resistance and mechanical strength, etc.

(1) Norbornene-based Polymer

As a norbornene based polymer for producing the container of the present invention, a norbornene based monomer ring-opening polymer, a ring-opening copolymer of a norbornene based monomer and other monomer capable of ring-opening copolymerizing with the same, hydrogenates of them, a norbornene based monomer addition polymer, and an addition copolymer of a norbornene based monomer and other monomer capable of ring-opening polymerizing with the same, etc. may be mentioned. Among these, hydrogenated ring-opening polymer of a norbornene based monomer is the most preferable in terms of heat resistance and mechanical strength, etc.

As a norbornene based monomer, bicyclo[2.2.1]-hept-2-ene (the popular name is norbornene) and the derivative (those having a substituent at the ring), tricyclo[$4.3.0^{1,6}.1^{2,5}$]-deca-3,7-diene (the popular name is dicyclopentadiene) and the derivative, 7,8-benzotricyclo[$4.3.0.1^{2,5}$]deca-3-ene (the popular name is methano tetrahydrofluorene) and the derivative, tetracyclo[$4.4.0.1^{2,5}.1^{7,10}$]-dodeca-3-ene (the popular name is tetracyclododecene) and the derivative, etc. may be mentioned.

As a substituent, an alkyl group, an alkylene group, a vinyl group, and an alkoxycarbonyl group, etc. may be mentioned, and the above norbornene based monomer may comprise two of more kinds of these substituents. Specifically, 8-methoxycarbonyl group-tetracyclo[$4.4.0.1^{2,5}.1^{7,10}$]-dodeca-3-ene, and 8-methyl-8-methoxycarbonyl-tetracyclo[$4.4.0.1^{2,5}.1^{7,10}$]-dodeca-3-ene, etc. may be mentioned.

These norbornene based monomers are used alone or in combination of two or more kinds for use.

Ring-opening polymers of these norbornene based monomers or norbornene based monomers and ring-opening copolymers with other monomers capable of ring-opening copolymerizing with the same can be obtained by polymerizing monomer components in the presence of well-known ring-opening polymer catalyst. As a ring-opening polymer catalyst, for example, a catalyst composed of ruthenium, osmium or other metal halide, nitrate salt or acetyl acetone compound and a reducing agent; or a catalyst composed of titanium, zirconium, tungsten, molybdenum or other metal halide or an acetyl acetone compound and an organic aluminum compound, etc. may be used.

As other monomers capable of ring-opening copolymerizing with a norbornene based monomer, for example, cyclohexene, cycloheptene, cyclooctene and other monocyclic cyclic olefin based monomers, etc. may be mentioned.

A hydrogenated ring-opening polymer of a norbornene based monomer can be normally obtained by adding a well-known hydrogenate catalyst including nickel, palladium or other transition metal to a polymerization solution of the above ring-opening polymer and hydrogenating carbon-carbon unsaturated bonds.

An addition polymer of a norbornene based monomer or an addition (co)polymer of a norbornene based monomer and other monomer capable of copolymerizing with the same can be obtained by (co)polymerizing these monomers by using a well-known addition polymerization catalyst, for example, a catalyst composed titanium, zirconium or a vanadium compound and an organic aluminum compound.

As other monomers capable of copolymerizing with a norbornene based monomer, for example, ethylene, propylene, 1-buten, 1-penten, 1-hexene, 1-octene, 1-decene, 1-dodecen, 1-tetradecen, 1-hexadecen, 1-octadecene, 1-eicosene and other α olefin having the carbonate number of 2 to 20 and derivatives of these; cyclobutene, cyclopentene, cycloexene, cyclooctene, 3a,5,6,7a-tetrahydro-4,7-methano-1H-inden and other cycloolefin and derivatives of these; and 1,4-hexadiene, 4-methyl-1,4-hexadiene, 5-methyl-1,4-hexadiene, 1,7-octadiene and other unconjugated dienes; etc. are used. Among these, α-olefin, particularly, ethylene are preferable.

These other monomers capable of copolymerizing with a norbornene based monomer may be used alone or in combination of two or more kinds. When performing addition copolymerization on a norbornene based monomer and other monomer capable of copolymerizing with the same, they are suitably selected so that the ratio of the structure unit originating from the norbornene based monomer and that originating from other copolymerizable monomer in the addition copolymer is normally in a range of 30:70 to 99:1, preferably 50:50 to 97:3, more preferably 70:30 to 95:5 in the weight ratio.

(2) Monocyclic Cyclic Olefin Based Polymer

As a monocyclic cyclic olefin based polymer, for example, an addition polymer of a monocyclic cyclic olefin based monomer, such as cyclohexene, cycloheptene and cyclooctene, can be used.

(3) Cyclic Conjugated Diene Based Polymer

As a cyclic conjugated diene based polymer, for example, a polymer obtained by performing addition polymerization of 1,2- or 1,4- on a cyclic conjugated diene based monomer, such as a cyclopentadiene and cyclohexadiene, and hydrogenates of the same can be used.

A molecular weight of a norbornene based polymer, monocyclic cyclic olefin based polymer or cyclic conjugated diene based polymer for producing the container of the present invention is suitably selected in accordance with the use object. But the weight average molecular weight in terms of polyisoprene or polystyrene in a cyclohexane solution (a toluene solution is used when the polymer resin does not dissolve) measured by gel permeation chromatography is normally in a range of 5,000 to 500,000, more preferably 8,000 to 200,000, and more preferably 10,000 to 100,000; in these ranges, mechanical strength and molding workability of the container are highly balanced and preferable.

(4) Vinyl Alicyclic Hydrocarbon Polymer

As a vinyl alicyclic hydrocarbon polymer, for example, a polymer of a vinyl alicyclic hydrocarbon based monomer, such as vinyl cyclohexene and vinyl cyclohexane, and hydrogenate of the same; a hydrate of an aromatic ring portion of a polymer of a vinyl aromatic monomer, such as styrene, $\alpha$-styrene; etc. may be mentioned. It may be a vinyl alicyclic hydrocarbon polymer, vinyl aromatic monomer, a random copolymer of other monomer capable of copolymerizing with these monomers, a block copolymer and other copolymers and hydrogenates of the same, etc. A block copolymer is not particularly limited, and diblock, triblock or larger multiblocks and a tapered block copolymer, etc. may be mentioned.

A molecular weight of a vinyl alicyclic hydrocarbon polymer used for producing the container of the present invention is suitably selected in accordance with the use object, and the weight average molecular weight in terms of polyisoprene or polystyrene in the cyclohexane solution (a toluene solution is used when the polymer resin does not dissolve) measured by gel permeation chromatography is normally in a range of 10,000 to 300,000, more preferably 15,000 to 250,000, and more preferably 20,000 to 200,000; in these ranges, mechanical strength and molding workability of the container are highly balanced and preferable.

A glass transition temperature (Tg) of a resin containing an alicyclic structure used for producing the container of the present invention may be suitably selected in accordance with the use object, but is preferably in a range of 50°C or higher, and more preferably in a range of 60°C to 170°C. When the glass transition temperature is low, deformation is easily caused at a high temperature, while when too high, it is liable that the workability declines and impact resistance declines.

A residual metal content by amount in the resin containing the alicyclic structure used for producing the container of the present invention is preferably 100 ppm or less, and furthermore preferably 20 ppm or less. When the residual metal content by amount is too large, it is liable that the absorbance is heightened and deterioration at the time of processing is accelerated.

To attain the above range of a residual metal content by amount in the resin containing the alicyclic structure, the metal content in the resin can be reduced by adsorbing metal atoms by performing processing on the resin solution by an adsorption agent, such as an alumina, having a pore volume of 0.5 $cm^3$/g or more and preferably 0.7 $cm^3$/g or more, and a specific surface area of 250 $cm^2$/g or more, or by repeatedly washing the resin solution alternately by acid water and pure water, etc. To remove metal atoms originating from a polymerization catalyst and a hydrogenate catalyst of being particularly easy to be residual, when hydrogenating the polymer on the above absorbing agent by using a heterogeneous catalyst carrying nickel or other hydrogenation catalyst metal, metal atom residuals originating from the polymerization catalyst metal are adsorbed, and hydrogenated catalyst metals can be easily removed together with the adsorbing agent by filtration.

The container of the present invention can be obtained by pelletizing the above resin containing alicyclic structure or a resin composition blended with an additive when desired, supplying the pellets to a molding machine, then, molding to a desired shape. The molding method is not particularly limited, and heat-melt molding, such as extrusion molding, injection molding, injection compression molding, injection blow molding, direct blow molding, compression molding, press molding and vacuum molding, may be mentioned. Also, when molding the container of the present invention, it may be molded integrally or by two-color molding.

As additives, well-known antioxidants, such as a phenol based antioxidants, phosphor based antioxidant and sulfur based antioxidant, may be added as far as not hindering to obtain characteristics of the container. Among these, phenol based antioxidants, particularly, alkyl-substituted phenol based antioxidants are preferable. These antioxidants may be used alone or in combination of two or more kinds. The blending quantity is suitably selected in a range of not detracting the object of the present invention, but is normally 3 parts by weight or less, preferably 1 part by weight or less with respect to 100 parts by weight of the resin containing the alicyclic structure.

When molding the container of the present invention by the above molding method, for example, when using injection molding or blow molding, the resin containing the alicyclic structure is put in a hopper in the molding machine, then, the resin is molten by heat in a cylinder, and the result is filled in a cavity of an injection mold and/or a blow mold and molded. At this time, the highest processing temperature (the highest processing temperature - resin oxidization start temperature) in the cylinder is preferably set to be 120°C or lower. By setting the highest processing temperature to be in the above range, deterioration, such as discoloration at the time of processing the resin, can be prevented.

In the present invention, to attain surface roughness Ra of 1 μm or less on the container, a method of reducing surface roughness of the mold itself by performing mirror polishing on the mold to be used at the time of molding the container may be mentioned. An operation of obtaining a shape by roughly processing the mold, polishing by an automatic polish machine for a predetermined time, then, measuring the surface roughness is repeated until desired accuracy is obtained. As to a grind particle diameter, those with a relatively large particle diameter of 1 to 10 μm or so are used when the surface roughness is rough, and grain particles of 1 μm or less are used after the surface roughness is reduced, so that desired surface roughness is easily obtained in a shorter time. Also, to transfer the mold surface accurately, the mold temperature is preferably lower than the glass transition temperature of a resin to be used by 30°C, or higher.

Also, when molding the container of the present invention, it is preferable to flow an inert has, such as nitrogen, in the hopper of the molding machine for processing the resin, so that absorbance at a wavelength of 240 to 400 nm of the container to be obtained can be improved.

A shape of the container 1 of the present invention is not particularly limited as far as it satisfies the above requirements. For example, a cell, a multi-well plate, a narrow-mouthed bottle, a wide-mouthed bottle, or combinations of these may be mentioned. Among them, a cell and multi-well plate are preferable. As a shape of the cell and multi-well plate, those having a cylinder shape and a rectangular column shape, etc. may be mentioned, but it is not limited to these.

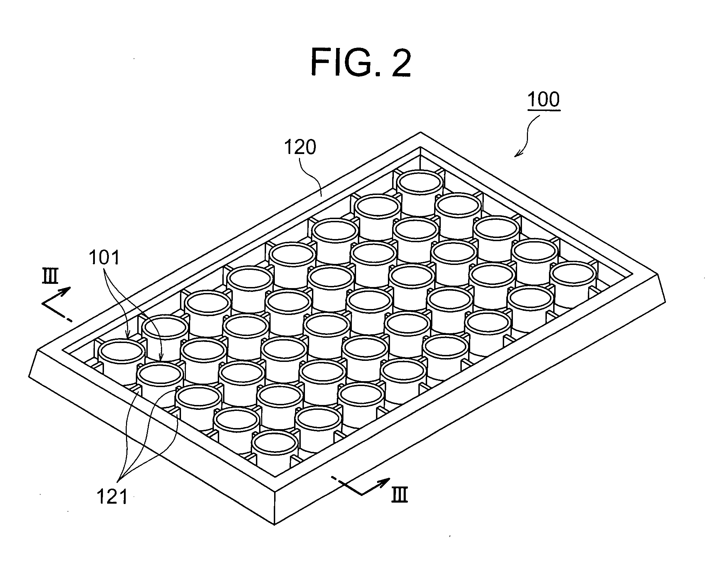

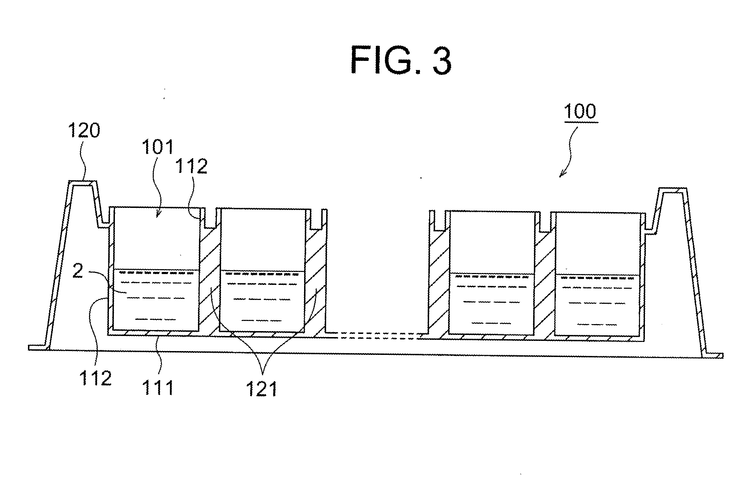

An example of a multi-well plate is shown in FIG. 2 and FIG. 3. The multi-well plate 100 of the present example is arranged with wells 101 having a bottom surface 111 and sidewall surface 112 in lengthwise and crosswise inside of a rectangular shaped frame body 120. As a result that the respective wells 101 and the frame body 120 are connected by a cross-shaped rib 121, the multi-well plate 100 is integrated. A measuring subject 2 is put in the respective wells 101. Such a multi-well plate 100 is also included in the container of the present invention. Note that a later explained 96-well is a multi-well plate 100 arranged with 96 wells 101, for example, by 8 rows by 12 lines.

The container of the present invention is suitable as a container for measuring concentration and purity of nucleic acid, such as DNA and RNA, particularly having absorbance at a wavelength of 240 to 400 nm.

An analyzing method of the present invention is a method of performing optical analysis on a measuring subject, by which the measuring subject 2 is put into a container 1 composed of a bottom portion 11 and a sidewall portion 12, wherein the bottom surface 11 and the sidewall surface 12 are made by a resin containing an alicyclic structure, and surface roughness Ra of contact faces 11a and 12a (at least the contact face 11a) of the bottom portion 11 and the sidewall portion 12 with the measuring subject 2 is 1 μm or less, and light R having a wavelength of 240 to 400 nm is used for performing optical analysis on the measuring subject. Here, the optical analysis means to obtain characteristics of the measuring subject 2, such as concentration and purity, by putting the measuring subject 2 into the container 1 of the present invention and using optical characteristics (for example, absorbance and transmittance, etc.) obtained by using the light R having a wavelength of 240 to 400 nm.

The analyzing method is not particularly limited, but for example when measuring absorbance, a measuring subject is put into the container, the container is set to an ultraviolet visible spectrophotometer, and light having a wavelength of 240 to 400 nm is irradiated to one of light pass-through portions of the container. Then, light intensity passed through other surfaces of the container is measured, and the light intensity is used for calculating absorbance of the measuring subject. As shown in FIG. 1, the light R irradiates normally from the bottom portion 11 or the above the container 1, and the irradiating direction is the vertical direction.

As the measuring subject applicable to the analyzing method of the present invention, it is not particularly limited as far as it has absorbance in a range of light having a wavelength of 240 to 400 nm, but those including nucleic acid, such as DNA and RNA, are particularly preferable. The absorption maximum wavelength of DNA and RNA is 260 nm. Here, the measuring subject is normally in a liquid state, such as an aqueous solution.

The analyzing method of the present invention will be explained by taking an example of a method of measuring purity and concentration of DNA. First, as a measuring subject, a diluted solution containing DNA is put into the container of the present invention. The dilution rate at this time is not particularly limited. The container containing the diluted solution including DNA is set to an ultraviolet visible spectrophotometer, and light having a wavelength of 260 nm and 280 nm is irradiated perpendicular to one of light pass-through portions of the container. Then, light intensity passed through to be detected is measured, and absorbance at the wavelength of 260 nm and 280 nm is measured from the intensity (the absorbance at this time is $\lambda_1(260)$ and $\lambda_1(280)$). Also, absorbance at the above wavelengths in a state where the diluted solution including DNA is not put into the container is measured (the absorbance at this time is $\lambda_0(260)$ and $\lambda_0(280)$). Then, purity and concentration of the DNA are calculated from the formulas below.

$$\text{Purity of DNA} = \{\lambda_1(260) - \lambda_0(260)\} / \{\lambda_1(280) - \lambda_0(280)\}$$

$$\text{Concentration of DNA } (\mu g/ml) = \{\lambda_1(260) - \lambda_0(260)\}$$

$$\times \text{ sample amount } (\mu g/ml) \times \text{ diluted rate (times)}$$

Examples

Below, examples and comparative examples will be taken to explain the present invention further in detail. The term "part" and "%" in these examples are based on weight unless otherwise mentioned. Note that the present invention is not limited only to these examples.
Measurement of various properties is made by following the methods below.

(1) Molecular Weight

Cyclohexane is used as a solvent and measured by the gel permeation chromatography (GPC), and a weight average molecular weight (Mw) in terms of reference polyisoprene is obtained.

(2) Glass Transition Temperature (Tg)

Measurement was made by using the differential scanning calorimetry (DSC) based on the JIS K7121.

(3) Hydrogenation Rate

The hydrogenation rate of a main chain and aromatic ring of a polymer is calculated by measuring $^1$H-NMR.

(4) Surface Roughness Ra of Container (light pass-through portion and not light pass-through portion)

Measurement was made by using a laser interferometry type surface roughness measuring device (product name: Surfcom 3000A made by Tokyo Seimitsu K.K) based on the JIS B0601.

(5) Absorbance of Container

By using an ultraviolet visible spectrophotometer (product name "V-570" made by JASCO Corporation), absorbance of the container at 400 nm, 340 nm, 300 nm, 280 nm, 260 nm and 240 nm is measured.

(6) Adsorption Amount of Protein of Container

An adsorption amount of protein of the container is obtained as below.
Washing solution: High-alkali (made by Hitachi Instruments Service Co., Ltd.) diluted by seven times
Test solution: 1 mg/ml solution of bovine serum albumin (made by Wako Pure Chemical Industries Ltd.)

Staining fluid: phenol reagent

1) The container is filled with the washing solution and left still at the room temperature for 30 days. After that, the washing solution is discharged and washing with distilled water is performed for three times.

2) The test solution is put into the washed container by 0.4 ml and left still at the room temperature for 24 hours. After that, the test solution is discharged and washing by distilled water is performed once. Then, after drying by blowing, 0.5 ml of the staining fluid is put into the container for staining, absorbance of the container (at a wavelength of 595 nm) is measured and absorbance of protein is calculated.

(7) Measurement of Absorbance Before and After Alkali Washing of Container

Absorbance is obtained as below before and after alkali washing of the container.

Washing solution: High-alkali (made by Hitachi Instruments Service Co., Ltd.) diluted by seven times

1) Absorbance of the container at a wavelength of 260 nm is measured.

2) After measuring the absorbance, the container is filled with the washing solution and left still at the room temperature for 30 days. After that, the washing solution is discharged and washed by distilled water for three times.

3) After drying the washed container by blowing an air, absorbance at a wavelength of 260 nm is measured.

[Example 1]

After drying a norbornene based hydrogenated ring-opening copolymer constituted by 70 wt% of ring-opening repeating units originating from dicyclopentadiene and 30 wt% of norbornene ring-opening repeating structure units (a weight average molecular weight of 44,000, a glass transition temperature of 70°C, a hydrogenated rate of 99.8%, an oxidization start temperature of 183°C, and a residual metal content by amount of 2 ppm) at 55°C for four hours, an extrusion molding machine having a hanger manifold type T-die having a screw diameter of 50 mmϕ, a compression rate of 2.5 and L/D of 30, under a condition where a die lip is 0.5 mm, a resin temperature is 200°C, a T-die temperature is 220°C, a cast roll temperature is 80°C and a cooling roll temperature is 50°C, a film having a thickness of 100 micron was produced (the film obtained here will be referred to as a film 1). Note that nitrogen was introduced from below the hopper to inside the hopper. When producing the film, the molten resin was brought to pass 40/80/120 meshes before being fed to the T-die. When making the film closely stick to the cast roll, an air knife was used.

The obtained film 1 is clear and colorless, and there was no defective, such as a void and fish eye, curl, twist, wave and other appearance defective, and a preferable appearance was obtained. The surface roughness Ra of the film was 0.06 μm.

Next, after drying the norbornene based hydrogenated ring-opened copolymer used for producing the film 1 at 55°C for four hours, the above obtained film 1 was attached to the mold fixed side, and a multi-well plate having 96 wells (a shape of the well is a square column) and a thickness of 100 μm was obtained by two-color molding. At this time, the mold temperature was 60°C and the processing temperature was 230°C. Note that nitrogen was introduced from below the hopper into the hopper when molding. To reduce surface roughness of the mold to be used, at the time of polishing, those having the grind particle size of 1 μm or larger were used for preliminary polishing, then, the grind particle size was changed to 1 μm or smaller to perform finish polishing. Surface roughness Ra at this time was 0.02 μm.

Surface roughness Ra of a contact face of the obtained multi-well plate with the measuring subject was 0.06 μm at the light pass-through portion (the bottom portion in this example) and 0.03 μm at the not light pass-through portion (the sidewall portion in this example). Measurement of absorbance, protein adsorption amount and absorbance of the multi-well plate was performed. The results are shown in Table 1 and Table 3.

[Example 2]

A norbornene based random addition copolymer (having a weight average molecule weight of 82,000, a glass transition temperature of 80°C, an oxidization start temperature of 190°C and a residual metal content by amount of 10 ppm) composed of 65 wt% of repeating structure units originating from norbornene and 35 wt% of repeating structure units originating from ethylene was used for producing a film having a thickness of 100 micron (the film obtained here will be referred to as a film 2) by using a vent type extrusion molding machine having a hanger type manifold T-die under condition of a die lip of 0.5 mm, a resin temperature of 200°C, a T-die temperature 220°C, a cast roll of 80°C, and a cooling roll of 50°C. By using a rotary pump, it was depressurized to $5 \times 10^{-2}$ Pa from the vent. Note that nitrogen was introduced from below the hopper into the hopper when molding. When producing the film, the molten resin was put through a 40/80/120 mesh before being fed to the T-die. When making the film closely stick to the cast roll, an air knife was used. The obtained film was clear and colorless, and there was no defective, such as a void and fish eye, curl, twist, wave and other appearance defective, and a preferable appearance was obtained. The surface roughness Ra of the film was 0.12 μm.

Next, after drying an addition copolymer composed of 65 wt% of repeating structure units originating from norbornene and 35 wt% of repeating structure units originating from ethylene (having a weight average molecular weight of 82,000 (in terms of polystyrene), a glass transition temperature of 80°C, and an oxidization start temperature of 190°C) at 65°C for 4 hours, the above obtained film 2 was attached to the mold fixed side, and a multi-well plate having 96 wells and a thickness of 100 μm was obtained by two-color molding. At this time, the mold temperature was set to be 70°C and the processing temperature 220°C. Note that nitrogen was introduced from below the hopper into the hopper when molding. Surface roughness Ra of a contact face of the obtained multi-well plate with the measuring subject was 0.12 μm at the light pass-through portion (the bottom portion in this example) and 0.08 μm at the not light pass-through portion (the sidewall portion in this example). Measurement of absorbance, protein adsorption amount and absorbance of the multi-well plate was performed. The results are shown in Table 1 and Table 3.

[Comparative Example 1]

After drying a polycarbonate resin (Panlite AD5503 made by Teijin Chemicals Ltd.) at 110°C four 4 hours, an extrusion molding machine having a hanger type manifold T-die with a screw diameter of 50 mmø, a compression ratio of 2.5 and L/D = 30 was used by setting the die lip to 0.5 mm for producing a film having a thickness of 100 micron (the film obtained here will be referred to as a film 3) under a condition of a resin temperature of 240°C, a cast roll at 145°C, and a cooling roll of 80°C. When producing the film, the molten resin was brought to pass 40/80/120 meshes before being fed to the T-die. When making the film closely stick to the cast roll, an air knife was used. The obtained film 3 was clear and colorless, and there was no defective, such as a void and fish eye, curl, twist, wave and other appearance defective, and a preferable appearance was obtained. The surface roughness Ra of the film was 0.07 μm.
Next, after drying a polycarbonate resin (production name: Panlite AD5503 made by Teijin Chemicals Ltd.) at 110°C for 4 hours, the above obtained film 3 was attached to the mold fixed side, and a multi-well plate having 96 wells having a thickness of 100 μm was obtained by two-color molding. The mold temperature was made to be 110°C and the processing temperature 280°C. Surface roughness Ra of a contact face of the obtained multi-well plate with the measuring subject was 0.07 μm at the light pass-through portion (the bottom portion in this example) and 0.05 μm at the not light pass-through portion (the sidewall portion in this example). Measurement of absorbance, protein adsorption amount and absorbance of the multi-well plate was performed. The results are shown in Table 1 and Table 3.

[Comparative Example 2]

Except that the polish grind particle size of the mold was changed to 1 μm or larger and the polishing time was reduced to change the surface roughness Ra of the mold to 1.05 μm, a multi-well plate was obtained in the same way as in the comparative example 1. Surface roughness Ra of a contact face of the obtained multi-well plate with the measuring subject was 0.07 μm at the light pass-through portion (the bottom portion in this example) and 1.53 μm at the not light pass-through portion. Measurement of absorbance, protein adsorption amount and absorbance of the multi-well plate was performed. The results are shown in Table 1 and Table 3.

[Example 3]

By using the 96-well multi-well plate produced in the example 1, concentration and purity measurement of DNA were performed. 2 μl of a DNA solution extracted from rat liver and purified was diluted by 98 μl of TE (1 mM of EDTA is included in 10 mM of Tris-CHI), absorbance at 260 nm and 280 nm was measured by an ultraviolet visible spectrophotometer. The absorbance at 260 nm was 0.572, and that at 280 nm was 0.325. A measurement value in a state without the DNA solution was 0.072 at 260 nm and 0.051 at 280 nm.
Therefore, the formulas below were obtained.

DNA purity = (0.572 - 0.072) / (0.325 - 0.051) =

1.824

DNA concentration (μg/ml) = 260 nm absorbance

(0.50) × 50(μg/ml) × dilution rate (50 times) =

1250(μg/ml)

Table 1

| | Surface Roughness Ra [μm] | | Absorbance [-] | | | | | |
| --- | --- | --- | --- | --- | --- | --- | --- | --- |
| | Light Pass-through Portion | Not Light Pass-through Portion | 400 nm | 340 nm | 300 nm | 280 nm | 260 nm | 240 nm |
| Example 1 | 0.06 | 0.03 | 0.04 | 0.04 | 0.05 | 0.05 | 0.07 | 0.08 |
| Example 2 | 0.12 | 0.08 | 0.04 | 0.04 | 0.05 | 0.06 | 0.08 | 0.10 |
| Comparative Example 1 | 0.07 | 0.05 | 0.07 | 0.17 | 0.45 | 0.72 | 1.06 | 1.54 |
| Comparative Example 2 | 0.07 | 1.53 | 0.07 | 0.17 | 0.45 | 0.72 | 1.06 | 1.55 |

Table 2

| | Protein Adsorption Amount [μg/ml] | |
| --- | --- | --- |
| | Before Alkali Washing | After Alkali Washing |
| Example 1 | 1.0 | 1.2 |
| Example 2 | 1.3 | 2.0 |
| Comparative Example 1 | 2.0 | 2.6 |
| Comparative Example 2 | 3.7 | 14.0 |

Table 3

| | Absorbance before and after Alkali Washing (wavelength of 260nm) | | | |
| --- | --- | --- | --- | --- |
| | 1 | | 2 | |
| | Before Washing | After Washing | Before Washing | After Washing |
| Example 1 | 0.07 | 0.07 | 0.07 | 0.07 |
| Example 2 | 0.08 | 0.08 | 0.08 | 0.08 |
| Comparative Example 1 | 1.06 | 1.08 | 1.07 | 1.10 |
| Comparative Example 2 | 1.06 | 1.15 | 1.07 | 1.20 |

From the evaluation results described in Table 1 to Table 3 above, when using the container of the present invention having low absorbance at a wavelength of 240 nm to 400 nm and a little surface roughness Ra of a contact face with a measuring subject, adsorption of substances to hinder measurement (for example, protein) after alkali washing was a little, furthermore, there was almost no change in absorbance before and after the alkali washing.

On the other hand, in comparative examples using a container having high absorbance at a wavelength of 240 nm to 400 nm and much surface roughness Ra on the contact face with the measuring subject, adsorption of substances to hinder measurement (for example, protein) after alkali washing was much, furthermore, the absorbance became high after the alkali washing.

**Claims**

1.   A container for optical analysis composed of a bottom portion and a sidewall portion,
     wherein said bottom portion and said sidewall portion are made by a resin containing an alicyclic structure, and
     surface roughness Ra is 1 μm or less, at the point where light for the optical analysis passes through, in the area where the bottom portion or the sidewall portion contacts with the measuring subject therefor.

**2.** The container as set forth in claim 1,
wherein thickness of said bottom portion and sidewall portion is 3 mm or thinner.

**3.** The container as set forth in claim 1,
wherein surface roughness Ra is 1 μm or less at the point where the light for optical analysis does not pass in said bottom portion and sidewall portion.

**4.** The container as set forth in claim 2,
wherein absorbance at a wavelength of 240 to 400 nm is 0.4 or lower at said thickness.

**5.** The container as set forth in claim 1,
wherein said alicyclic structure containing polymer is a norbornene based polymer or hydrogenate of the same.

**6.** The container as set forth in claim 1,
wherein said resin containing alicyclic structure is hydrogenated ring-opening polymer of a norbornene based monomer.

**7.** The container as set forth in claim 1,
wherein a residual metal content in said resin containing alicyclic structure is 100 ppm or less.

**8.** The container as set forth in claim 1,
wherein the measuring subject includes DNA or RNA.

**9.** The container as set forth in claim 1, which is a multi-well plate.

**10.** An optical analyzing method of a measuring subject comprising the steps of:

putting the measuring subject into a container composed of a bottom portion and a sidewall portion, wherein the bottom portion and the sidewall portion are made by a resin containing alicyclic structure, and surface roughness Ra is 1 μm or less, at the point where light for the optical analysis passes through, in the area where the bottom portion or the sidewall portion contacts with the measuring subject therefor; and
performing optical analysis on a measuring subject by using light having a wavelength of 240 to 400 nm.

**11.** The analyzing method as set forth in claim 10,
wherein the measuring subject includes DNA or RNA.

# FIG. 1

# FIG. 2

EP 1 524 514 A1

FIG. 3

## INTERNATIONAL SEARCH REPORT

International application No.

PCT/JP03/07725

| A. CLASSIFICATION OF SUBJECT MATTER |
|---|
| Int.Cl$^7$ G01N21/03 |

According to International Patent Classification (IPC) or to both national classification and IPC

| B. FIELDS SEARCHED |
|---|

Minimum documentation searched (classification system followed by classification symbols)

Int.Cl$^7$ G01N21/00-21/74

Documentation searched other than minimum documentation to the extent that such documents are included in the fields searched

| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

PATOLIS

C. DOCUMENTS CONSIDERED TO BE RELEVANT

| Category* | Citation of document, with indication, where appropriate, of the relevant passages | Relevant to claim No. |
|---|---|---|
| Y | JP 2000-39420 A (Asahi Kasei Corp.), 08 February, 2000 (08.02.00), Par. Nos. [0007], [0008], [0030], [0034], [0035], [0073] (Family: none) | 1-11 |
| Y | JP 8-136446 A (Mitsui Petrochemical Industries, Ltd.), 31 May, 1996 (31.05.96), Par. Nos. [0013], [0053], [0081], [0084], [0089], [0090] (Family: none) | 1-11 |
| Y | WO 97/21089 A (The Perkin-Elmer Corp.), 12 June, 1997 (12.06.97), Full text & JP 11-500232 A | 1,8,11 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 30 September, 2003 (30.09.03) | Date of mailing of the international search report 14 October, 2003 (14.10.03) |
|---|---|
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/07725

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 01/059432 A   (ILLUMINA, INC.),<br>16 August, 2001 (16.08.01),<br>Full text<br>& JP 2003-522969 A | 1,8,9,11 |
| Y | WO 00/30752 A   (Molecular Machines & Industries GmbH.),<br>02 June, 2000 (02.06.00),<br>Full text<br>& JP 2002-530661 A | 1,8,9,11 |

Form PCT/ISA/210 (continuation of second sheet) (July 1998)